# EUROPÄISCHE PATENTSCHRIFT

(11) **EP 0 951 327 B1**
(45) Veröffentlichungstag und Bekanntmachung des Hinweises auf die Patenterteilung: **20.06.2001**
(21) Anmeldenummer: 97937459.2
(22) Anmeldetag: 11.08.1997
(51) Int. Cl.: B01D 24/28, B01D 24/30, B01D 24/46

(54) **VORRICHTUNG ZUM KONTINUIERLICHEN FILTERN VON FLÜSSIGKEITEN**
DEVICE FOR CONTINUOUS FILTRATION OF LIQUIDS
DISPOSITIF POUR FILTRER DES LIQUIDES EN CONTINU

(30) Priorität: 12.08.1996 DE 19632447
(43) Veröffentlichungstag der Anmeldung: 27.10.1999
(73) Patentinhaber: Wabe Wasseraufbereitung GmbH, 45888 Gelsenkirchen (DE)
(72) Erfinder: VAN UNEN, Sabine, D-45968 Gladbeck (DE)
(74) Vertreter: Neumann, Andreas
(86) Internationale Anmeldenummer: DE9701760
(87) Internationale Veröffentlichungsnummer: WO9806473

(56) Entgegenhaltungen:
- EP-A- 0 291 538
- DE-A- 2 434 968
- US-A- 3 667 604
- US-A- 5 252 230

## Beschreibung

Die Erfindung betrifft eine Vorrichtung zum kontinuierlichen Filtrieren von FlüssigkeitenVorrichtung zum kontinuierlichen Filtrieren von Flüssigkeiten, welche einen Filtrationsbehälter mit einem aufrechtstehenden im Querschnitt rechteckig ausgestalteten Behälterabschnitt umfaßt, dessen im Querschnitt rechteckig ausgerichtete Wände eine Einlaufseitenwand und eine der Einlaufseitenwand gegenüberliegende Auslaufseitenwand aufweisen, wobei sich an die Einlaufseitenwand eine Zulaufkammer und an die Auslaufseitenwand eine Filtratsammelkammer anschließen, und die Einlaufseitenwand und die Auslaufseitenwand parallel zueinander und parallel zu der Berieselungsrichtung eines Schüttgutes auf ein Filterbett ausgerichtet sind, welcher Behälterabschnitt einen Berieselungsraum zur Aufnahme einer Schüttguttrennapparatur zum Abtrennen von Schmutzteilchen von dem Schüttgut und Berieseln des Filterbettes sowie einen an den Berieselungsraum sich anschließenden Filterraum zur Aufnahme des Filterbettes aus dem körnigen Schüttgut umfaßt, an das untere Ende des Filterraums sich ein Abzugsraum anschließt, wobei der Abzugsraum trichterförmig ausgebildet ist und an das untere Ende des Behälterabschnitts der Abzugsraum mit seiner Trichterwand angeordnet ist, die Schüttguttrennapparatur mit einem Ableitungsrohr eines Hebesystems in Verbindung steht, welches mit seinem unteren Saugende in den unteren Abschnitt des Abzugsraums hineinragt und das Ableitungsrohr sich in das obere Ende des Berieselungsraums hin erstreckt sowie ein Verfahren zum kontinuierlichen Filtrieren von Flüssigkeiten.

Die Vorrichtung gemäß US-A-5 252 230 betrifft eine solche zum kontinuierlichen Filtrieren von Flüssigkeiten mit einem aufrechtstehenden im Querschitt rechteckigen Behälterabschnitt, der einen ein körniges Filterbett beinhaltenden Filterraum bildet. Der Filterraum hat eine mit Öffnungen versehene Einlaufseitenwand und dieser gegenüberliegend eine mit Öffnungen versehene Auslaufseitenwand. Gegenüber diesen Wänden sind undurchlässige Wände angeordnet, so daß eine Zulaufkammer und eine Filtratsammelkammer gebildet werden. Im unteren Teil eines an den Filterraum sich anschließenden trichterförmigen Abzugsraums wird Schüttgut mittels eines Hebesystems abgezogen und nach der Entfernung der in dem Schüttgut befindlichen Schmutzteilchen dem Filterbett von oben erneut zugeführt wird. Die Zuführung des Schüttgutes erfolgt gleichmäßig verteilt über die Oberfläche des Filterbettes mittels Öffnungen.

Die herkömmliche Vorrichtung eignet sich jedoch lediglich für die Filtration von sehr feinen Schmutzteilchen, welche sich durch einen sehr geringen Durchmesser und Ausmaße auszeichnen, da ebenso diese Vorrichtung sich wegen der gleichmäßigen Verteilung des zugeführten Schüttgutes über die Oberfläche des Filterbettes mittels Öffnungen durch die an der Einlaufseitenwand auftretenden Verstopfungen bei Zuführung von zu filtrierenden Flüssigkeiten auszeichnet, welche neben sehr kleinen Schmutzteilchen auch Schmutzteilchen größeren Durchmessers aufweisen. Daher eignet sich die herkömmliche Vorrichtung nicht für die Reinigung von zu filtrierenden Flüssigkeiten mit hohem Feststoff- und Schwebstoffanteil, sondern lediglich zur Nachreinigung von Suspensionen.

Auch die in DE-A-2 434 968 offenbarte Vorrichtung umfaßt ein Filtriergefäß, bei welchem der Sand als Schüttgut von oben zugeführt und im unteren Bereich des Filtriergefäßes abgezogen wird und das Schüttgut im Kreuzstrom von der zu filtrierenden Flüssigkeit durchströmt wird, wobei durch Klassieren und Aufteilen des Schüttguts versucht wird, ein Verstopfen des Filtermaterialbetts zu verhindern.

Eine Schüttguttrennapparatur befindet sich oberhalb der Oberseite des Vorrats, über welchen das Teilchenmaterialbett kontinuierlich mit Sand versorgt wird. Es bildet sich ein Schüttguthaufen unterhalb der Schüttguttrennapparatur in dem Vorrat, hingegen wandert der Sand des Schüttguthaufens aus dem Vorrat, welcher nicht der Filtration der zu filtrierenden Flüssigkeit sondern lediglich der Sammlung und Zuführung dient, in das Teilchenmaterialbett, durch welches anschließend die zu filtrierende Strömung über die Oberfläche eintretende in diagonaler Richtung und in gekrümmter Weise erfolgt.

Die zu filtrierende Flüssigkeit strömt über die freie, geneigte Oberfläche in das Teilchenmaterialbett von oben ein und über die zumindest teilweise bez. der Oberfläche tiefer angeordnete Auslaufseite quasi in diagonaler Richtung in eine Filtratsammelkammer und von dort in die Ableitung. Daher erfolgt die Durchströmung des Teilchenmaterialbettes gekrümmt, da die Auslaufseite im unteren Bereich des Teilchenmaterialbettes und der Einlaufseite angeordnet ist und hinsichtlich ihrer Höhe im Vergleich zu der Erstreckung der Einlaufseite in vertikaler Richtung geringere Ausmaße aufweist. Der Schüttguthaufen des Vorrats versorgt zwar das Teilchenmaterialbett mit z.B. Sand, aber die Klassierung des Sandes erfolgt erst in dem Abschnitt, welcher sich an das diagonal in den Filtrierraum angeordnete Ablenkblech anschließt. Aufgrund des in den Gefäßinnenraum hineinragenden Ablenkbleches erfolgt nach der vorhergehenden Vermischung in dem Vorrat die Klassierung des Sandes, wobei sich drei Klassierungsbereiche nämlich erster Klassierungsbereich mit kleineren Sandpartikel im oberen Bereich der geneigten Fläche, zweiter Klassierungsbereich mit groberen Sandpartikel unter Hinunterrollen im unteren Teil der geneigten Fläche sowie dritter Klassierungsbereich mit Partikeln, deren Größe im gesamten Größenbereich an der Wasserauslaufseite liegen. Gemäß der Strömungslehre ist der Druckverlust größer, je größer der Weg durch das Teilchenmaterialbett ist; da der Weg der zu filtrierenden Flüssigkeit durch das Teilchenmaterialbett in dessen unterem Bereich der geneigten Einlaufseite größer ist, ist auch der Druckverlust größer, d.h. die Flüssigkeit durchströmt das Teilchenmaterialbett im wesentlichen lediglich in seinem oberen Bereich, so daß der der Filtration dienende Bereich des Teilchenmaterialbettes weit geringer ist als der Bereich, der durch die Einlaufseite als solcher der zu filtrierenden Flüssigkeit angeboten wird.

Dieser bedeutende Nachteil der nur beschränkten Filtration des herkömmlichen Verfahrens führte auch bisher dazu, daß die Reinigung durch den ersten Klassierungsbereich und durch den sich anschließenden dritten Klassierungsbereich erfolgt, und nicht -wie die Reinigung erfolgen sollte- zuerst durch den zweiten Klassierungsbereich als Grobreinigungsschritt.

Aufgabe der vorliegenden Erfindung soll es sein, ein Verstopfen des Filters zu verhindern. Zudem soll eine Vorrichtung zum kontinuierlichen Filtrieren von Flüssigkeiten bereitgestellt werden, welche insbesondere zur Reinigung von Industrieabwässern oder Rohabwässern mit hohen Feststoffrachten jeglicher Art geeignet ist. Unter Feststoffrachten werden im Sinne der Erfindung beispielsweise neben festen Stoffen auch großvolumige Flocken oder flockenartige Teilchen verstanden, die recht schnell insbesondere den dem Einlauf von Abwässern zugewandten Filterschichtbereich herkömmlicherweise zu verstopfen vermögen. Darüber hinaus soll der apparative Aufwand der Vorrichtung zum kontinuierlichen Filtrieren von Flüssigkeiten gering gehalten werden, um sowohl eine hohe Betriebssicherheit derselben zu gewährleisten, ohne den Einsatz von aufwendigen Steuereinrichtungen der Filtrationsschritte.

Die Aufgabe wird gelöst durch die Erfindung gemäß dem Kennzeichen des Hauptanspruchs und dem der Nebenansprüche. Die Unteransprüche betreffen bevorzugte Ausführungen und Weiterentwicklungen der Erfindung

Gegenstand der Erfindung ist eine Vorrichtung zum kontinuierlichen Filtrieren von Flüssigkeiten, welche einen Filtrationsbehälter mit einem aufrechtstehenden im Querschnitt rechteckig ausgestalteten Behälterabschnitt umfaßt,
a) dessen im Querschnitt rechteckig ausgerichtete Wände eine Einlaufseitenwand und eine der Einlaufseitenwand gegenüberliegende Auslaufseitenwand aufweisen, wobei sich an die Einlaufseitenwand eine Zulaufkammer und an die Auslaufseitenwand eine Filtratsammelkammer anschließen, und die Einlaufseitenwand und die Auslaufseitenwand parallel zueinander und parallel zu der Berieselungsrichtung eines Schüttgutes auf ein Filterbett ausgerichtet sind,
b) welcher Behälterabschnitt einen Berieselungsraum zur Aufnahme einer Schüttguttrennapparatur zum Abtrennen von Schmutzteilchen von dem Schüttgut und Berieseln des Filterbettes sowie einen an den Berieselungsraum sich anschließenden Filterraum zur Aufnahme des Filterbettes aus dem körnigen Schüttgut umfaßt,
c) an das untere Ende des Filterraums sich ein Abzugsraum anschließt, wobei der Abzugsraum trichterförmig ausgebildet ist und an das untere Ende des Behälterabschnitts der Abzugsraum mit seiner Trichterwand angeordnet ist,
d) die Schüttguttrennapparatur mit einem Ableitungsrohr eines Hebesystems in Verbindung steht, welches mit seinem unteren Saugende in den unteren Abschnitt des Abzugsraums hineinragt und das Ableitungsrohr sich in das obere Ende des Berieselungsraums hin erstreckt, welche dadurch gekennzeichnet ist, daß
e) die im Bereich des Filterraums flüssigkeitsdurchlässige Einlaufseitenwand Öffnungen zur Einleitung der zu filtrierenden Flüssigkeit von der Zulaufkammer in den Filterraum auf der ganzen Höhe des Filterraums und der ganzen Breite der Einlaufseitenwand aufweist,
f) die im Bereich des Filterraums flüssigkeitsdurchlässige Auslaufseitenwand Öffnungen zur Ableitung des Filtrats aus dem Filterraum in die Filtratsammelkammer auf der ganzen Höhe des Filterraums und der ganzen Breite der Auslaufseitenwand aufweist,
g) das Filterraum einlaufseitig von der Einlaufseitenwand und auslaufseitig von der Auslaufseitenwand begrenzt ist,
h) das Ausmaß der Fläche der durchströmten Auslaufseite dem der Fläche der Einlaufseite entspricht,
i) die Schüttguttrennapparatur mit einem Schüttgutverteiler verbunden ist, der eine oder mehrere Schüttgutberieselungseinrichtungen mit Austrittsöffnungen aufweist, welche in Reihe parallel zu der Auslaufseite ausgerichtet sind,
j) die Schüttgutberieselungseinrichtungen oberhalb der Oberseite des Filterbettes und an der Auslaufseitenwand angeordnet sind zur Berieselung der Oberfläche der Oberseite des im Filterraums sich befindlichen Filterbettes mit dem in der Schüttguttrennapparatur abgetrennten und von Schmutzteilchen befreiten Schüttgut und zur Bildung mindestens eines ungleichseitigen Schüttguthaufens mit einer der Einlaufseitenwand zugewandten Hangseite, welche länger ist als die der Auslaufseitenwand zugewandte Hangseite.

Ein weiterer Gegenstand der Erfindung bezieht sich auf eine Verwendung der erfindungsgemäßen Vorrichtung zur Reinigung von Abwässern, vorzugsweise der industriellen Art, zur Aufbereitung von Brauchwasser aus Grund- und Oberflächenwasser, Kreislaufwasser, Kühlwasser und Schwimmbeckenwasser, sonstiger Prozeßflüssigkeiten, wie Salzsole und Schwefelsäure etc., sowie zur Trinkwasseraufbereitung.

Ein weiterer Gegenstand der Erfindung ist ein Verfahren zum kontinuierlichen Filtrieren von Flüssigkeiten, wobei
a) eine zu filtrierende Flüssigkeit durch eine flüssigkeitsdurchlässige Einlaufseitenwand eines aufrechtstehenden rechteckig ausgestalteten Behälterabschnitts eines Filtrationsbehälters in dessen Filterraum, welcher körniges Schüttgut als Filter aufweist, über die ganze Höhe des Filterraums und über die ganze Breite der Einlaufseite des Filterraums eingeleitet und das Filtrat durch eine der Einlaufseite gegenüberliegende flüssigkeitsdurchlässige Auslaufseitenwand über die ganze Höhe des Filterraums und über die ganze Breite der Auslaufseite des Filterraums abgeleitet werden,
b) an das obere Ende des Filterraums ein Berieselungsraum zur Aufnahme einer Schüttguttrennapparatur zum Abtrennen von Schmutzteilchen von dem Schüttgut und an dem unteren Ende des Filterraums ein Abzugsraum ausgebildet werden,
c) das Schüttgut in dem Filterraum von oben nach unten und quer zu der Fließrichtung der zu filtrierenden Flüssigkeit in dem Filterraum bewegt wird,
d) das Schüttgut im unteren Abschnitt des Abzugsraums mittels eines Hebesystems abgezogen, von Schmutzteilchen befreit und der Oberfläche der Oberseite des Filterbettes durch Berieselung der Oberfläche der Oberseite des Filterbettes unter Bildung mindestens eines ungleichseitigen Schüttguthaufens zugeführt wird, wobei die der Einlaufseite zugewandte Hangseite des Schüttguthaufens länger als die der Auslaufseite zugewandte ist und das Schüttgut im wesentlichen mit zunehmender Korngröße in Richtung zu der Einlaufseite verteilt wird und
e) das Filterbett ganzflächig von der zu filtrierenden Flüssigkeit durchströmt wird, wobei das Ausmaß der Fläche der durchströmten Auslaufseite dem Ausmaß der Fläche der Einlaufseite entspricht.

Durch das erfindungsgemäße Verfahren wird die zu filtrierende Flüssigkeit beispielsweise industrielle Abwässer, Grundwasser, Oberflächenwasser, Kreislaufwasser, Kühlwasser und Schwimmbeckenwasser durch die eine Seite als Einlaufseite eines aufrechtstehenden im Querschnitt rechteckigen Behälterabschnitts eines Filtrationsbehälters in dessen Filterraum geleitet. Der Filterraum weist als körniges Schüttgut beispielsweise feinkörniges Material wie mindestens einen Vertreter der Sand, Kohle, Anthrazit, Lava, Bimsstein, Glas, Kunststoff, Ton und Materialien aus Cellulose usw. umfassenden Gruppe vorzugsweise in Granulatform auf. Die zu filtrierende Flüssigkeit wird über die ganze Höhe des Filterraumes und über die gesamte Breite der Einlaufseite in den Filterraum eingeleitet und über die ganze Höhe des Filterraumes und über die gesamte Breite der Auslaufseite aus dem Filterraum abgeleitet.

Im Sinne der Erfindung wird unter Filterraum derjenige Raum des Behälters bezeichnet, welcher das Filterbett mit dem körnigen Schüttgut aufweist und von der zu filtrierenden Flüssigkeit wie Abwasser, vorzugsweise der industriellen Art, von Brauchwasser aus Grund- und Oberflächenwasser, von Kreislaufwasser, von Kühlwasser und von Schwimmbeckenwasser von der Einlaufseite zu der Auslaufseite durchflossen wird. Unter Filtration wird auch Reinigung verstanden.

Die zu filtrierende Flüssigkeit wie Haushaltsabwasser oder auch Industrierohabwasser mit hohem Feststoff- und / oder Schwebstoffanteil fließt von der Einlaufseite auf die der Einlaufseite gegenüberliegende Auslaufseite des Behälterabschnitts. Unter kontinuierliches Filtrieren wird im Sinne der Erfindung ebenso verstanden, daß zumindest auch ein Teil des Schüttgutes während der Beschickung mit der zu filtrierenden Flüssigkeit dauernd regeneriert, d.h. von den Schmutzteilchen befreit wird, und dem Filtrationsverfahren erneut zugeführt wird. Schmutzteilchen betreffen auch Feststoff-, Schwebstoffteilchen und während der Filtration ausflockende Teilchen.

Durch die Auslaufseite gelangt die filtrierte Flüssigkeit, auch Filtrat genannt, in eine Filtratsammelkammer und wird nach außen über einen vorzugsweise am oberen Ende der Filtratkammer angeordneten Stutzen oder einen Ablauf abgeführt. Der Stutzen oder Ablauf kann auch an einer anderen Stelle der Außenhülle angeordnet sein. Das Filtrat durchströmt die Auslaufseite über die ganze Höhe des Filterraumes und über die ganze Breite der Auslaufseite. Durch die Durchströmung der Einlaufseite und der Auslaufseite über die ganze Höhe des Filterraums und deren Breiten mittels einer Vielzahl von Öffnungen oder Durchbrüchen wird gewährleistet, daß das Filterbett im wesentlichen gleichmäßig und ganzflächig von der zu filtrierenden Flüssigkeit durchströmt wird. Die gleichmäßige und ganzflächige Durchströmung des Filterbettes gewährt ebenso, daß in der erfindungsgemäßen Vorrichtung unter Verwendung des erfindungsgemäßen Verfahrens im wesentlichen eine homogene Filtrationsfläche ohne Filtrationstoträume in Fließrichtung sowie eine gleichmäßige Verteilung der z.B. zu entfernenden Schmutzteilchen und Schwebstoffe geboten wird, so daß sich das erfindungsgemäße Verfahren auch durch höhere und konstante Durchsatzleistungen und geringe Filtrationswiderstände wegens Fehlens lokaler Verstopfungen im Gegensatz zur den Vorrichtungen gemäß DE-A-2 434 968 auszeichnet. Auch finden sich keine Unregelmäßigkeiten in der Durchströmung des Filterbettes, da vorzugsweise das Ausmaß der Fläche der durchströmten Auslaufseite dem der Fläche der Einlaufseite entspricht.

Das körnige Schüttgut des Filterbettes wird kontinuierlich quer zur Richtung der Strömung der zu filtrierenden Flüssigkeit von oben nach unten in dem Filtrationsbehälter bewegt. Der im Querschnitt rechteckig ausgebildete Behälterabschnitt des Filtrationsbehälters umfaßt den Filterraum und den Berieselungsraum. Das untere Ende des Filtrationsbehälters ist trichterförmig ausgestaltet. Jedoch ist der trichterförmigen Ausbildung des Abzugsraums keine Grenzen gesetzt; der Abzugsraum kann auch oktogonal trichterförmig sein. Die trichterförmige Ausbildung der Trichterwand des Behälters umgibt den Abzugsraum. Der Abzugsraum ist mit Schüttgut gefüllt, in welchem im unteren Abschnitt des Abzugsraum das Schüttgut mittels eines herkömmlichen Hebesystems gleichförmig oder pulsierend durch den bei Betrieb des Hebesystems hervorgerufenen Sog eingesaugt wird. Das eingesogene Schüttgut wird mit Hilfe des Hebesystems zusammen mit einem Waschmedium, z.B. Wasser, zu filtrierende Flüssigkeit, und / oder Filtrat, zu einer Schüttguttrennapparatur gefördert, welche sich in dem oberen Ende des Behälters befindet. Jedoch wird in einer bevorzugten erfindungsgemäßen Ausführungsform das Hebesystem mit Luft betrieben. Das Waschmedium kann auch Gas wie Luft sein. Das obere Ende des Filtrationsbehälters wird als Berieselungsraum bezeichnet. Der Berieselungsraum kann zum Beispiel quader- oder würfelförmig ausgebildet sein. Der Filterraum ist ebenso würfel- oder quaderförmig ausgebildet. Der Behälterabschnitt umfaßt den Berieselungsraum und den Filterraum, wenn er im Querschnitt rechteckig ist und zum Beispiel von würfelförmiger, vorzugsweise Gestalt, ist. In der Schüttguttrennapparatur erfolgt die Regenerierung und die Abscheidung des Schüttgutes von den Schmutzteilchen.

Als Schüttgutguttrennapparatur ist z.B. ein dem Fachmann bekannter Aufstromklassierer verwendbar, in welchen das Hebesystem hineinbefördert. Das Prinzip dieses Aufstromklassierers beruht auf der unterschiedlichen Sedimentationsgeschwindigkeit von verschieden großen Schmutzteilchen. Das bedeutet, daß die Sinkgeschwindigkeit des Schüttgutes hier beispielsweise die der Sandkörner größer ist als die der Schmutzteilchen. Entgegen der Sedimentationsrichtung der Sandkörner, also senkrecht nach oben, strömt andauernd das Waschmedium z.B. Wasser. Die Strömungsgeschwindigkeit dieses Volumenstromes ist geringer als die Sedimentationsgeschwindigkeit der Sandkörner, jedoch um ein Vielfaches größer als die der Schmutzteilchen. Dazu kommt es, daß die Schmutzteilchen mit dem aufströmenden Volumenstrom mitgenommen werden und mit dem Schmutz-Waschmedium ausgeschieden werden. Dieses Schmutz-Waschmedium setzt sich vorwiegend aus dem Waschmedium wie Wasser, Filtrat und / oder zu filtrierende Flüssigkeit und den Schmutzteilchen zusammen. Die von den Schmutzteilchen befreiten Sandkörner sedimentieren oder rieseln auf das Filterbett.

An die Schüttguttrennnapparatur ist ein Schüttgutverteiler gekoppelt. Der Schüttgutverteiler umfaßt eine oder mehrere Schüttgutberieselungseinrichtungen und gegebenenfalls Leitungen, über die das Schüttgut von der Schüttguttrennapparatur zu der oder den Schüttgutberieselungseinrichtungen gelangt. Die Schüttgutberieselungseinrichtung kann eine Austrittsöffnung und / oder ein Verteilerblech sein. Mittels des Schüttgutverteilers erfolgt die Berieselung der Oberfläche der Oberseite des Filterbettes mit gereinigtem Schüttgut.

Durch die bestimmte Anordnung der Verteilerbleche oder der Austrittsöffnungen des Schüttgutverteilers kann das Ausmaß der Ungleichseitigkeit des Schüttguthaufens bestimmt werden. Zum Beispiel kann die Ungleichseitigkeit des Schüttguthaufens durch die Lageveränderung der an den Austrittsöffnungen gekoppelten Verteilerbleche, d.h. durch die Änderung der Beabstandung der Verteilerbleche von der Auslaufseite, über welche das Schüttgut auf die Oberseite des Filterbettes rieselt, variiert werden. Das Ausmaß der Ungleichseitigkeit des Schüttguthaufens kann auch von dem Ausmaß der Beabstandung der Austrittsöffnungen des Schüttgutverteilers von der Auslaufseite gesteuert werden, falls z.B. keine Verteilerbleche vorhanden sind. Je nach Anforderung an das Filtervermögen der erfindungsgemäßen Vorrichtung können der Schüttgutverteiler mit seinen Austrittsöffnungen und / oder die Verteilerbleche in Richtung Einlauf- oder Auslaufseite, also in einem Bereich zwischen der Auslaufseite und der Mitte-Längsachse des Behälterabschnitts, des Filterraums und / oder Berieselungsraums gefahren werden, mit der Maßgabe, daß ein ungleichseitiger Schüttguthaufen auf der Oberseite des Filterbettes bzw. der Oberfläche der Oberseite des Filterbettes ausgebildet ist, wodurch ermöglicht ist, daß das Schüttgut mit größerem Korndurchmesser im wesentlichen auf der Einlaufseite und das mit geringerem Korndurchmesser auf der Auslaufseite angeordnet wird; die der Einlaufseite zugewandte Hangseite des ungleichseitigen Schüttguthaufens ist länger als die der Auslaufseite zugewandte Hangseite des Schüttguthaufens. Die Mitte-Längsachse des Behälterabschnitts bzw. des Filterraums ist von der Einlaufseite und der Auslaufseite gleich beabstandet ausgerichtet.

Der Schüttgutverteiler weist eine Vielzahl von Schüttguteinrichtungen also z.B. Austrittsöffnungen für das gereinigte Schüttgut auf An den Austrittsöffnungen können noch Verteilerbleche gekoppelt sein, über welche die Oberfläche des Filterbettes mit Schüttgut berieselt und z.B. die Beabstandung der Spitzen der Schüttguthaufen von der Auslaufseite gesteuert werden können.

Da der Schüttgutverteiler oder die Schüttgutberieselungseinrichtung z.B. die Austrittsöffnungen der Schüttguttrennapparatur sich in der erfindungsgemäßen Vorrichtung auf dem der Auslaufseite zugewandten Bereich oberhalb der Oberfläche der Oberseite des Filterbettes befinden, sedimentiert oder rieselt das Schüttgut unter Bildung eines Schüttguthaufens auf die Oberfläche der Oberseite des Filterbettes. Die Oberseite des Filterbettes ist die dem Abzugsraum abgewandte Seite des Filterbettes. Der Schüttguthaufen ist von ungleichseitiger Gestalt. Der Schüttguthaufen befindet sich somit nicht zentriert mittig auf dem Filterbett sondern nahe dem der Auslaufseite zugewandten Bereich, die Spitze des Schüttguthaufens ist in dem Bereich zwischen der Auslaufseite und der Mitte-Längsachse des Behälterabschnitts, des Filterraums und / oder Berieselungsraums angeordnet. Es sind mehrere Austrittsöffnungen vorhanden, die in Reihe parallel zu der Auslaufseite angeordnet sind. Die Austrittsöffnungen können oval, rund, eckig, und / oder länglich ausgebildet sein. Längliche Austrittsöffnungen erstrecken sich parallel zu der Auslaufseite des Behälters - vorzugsweise über die gesamte Breite der Auslaufseite- und erzeugen einen ungleichseitigen Schüttguthaufen auf der Oberfläche der Oberseite des Filterbettes, dessen Spitze in der Draufsicht auf die erfindungsgemäße Vorrichtung im wesentlichen sich parallel zu der Auslaufseite des Filtrationsbehälter hin erstreckt. Das bedeutet, daß die Spitze des Schüttguthaufens in der Draufsicht im wesentlichen quer zu der Fließrichtung der zu filtrierenden Flüssigkeit im Filterbett angeordnet ist. Auch im Falle der Anordnung von mehreren runden Austrittsöffnungen in Reihe parallel zu der Auslaufseite wird im wesentlichen ein ungleichseitiger Schüttguthaufen erzeugt, wobei die Spitze des seitiger Schüttguthaufen erzeugt, wobei die Spitze des Schüttguthaufens -als Schüttguthaufenkamm sich erstreckend- in der Draufsicht parallel zu der Auslaufseite verläuft.

Durch Berieseln der Oberfläche der Oberseite des Filterbettes werden ein oder mehrere ungleichseitige Schüttguthaufen erzeugt, deren Spitze bzw. Spitzen parallel zu der Auslaufseite erstrecken. Durch die Vielzahl an Austrittsöffnungen entstehen im wesentlichen jedoch ein Schüttguthaufen, da zu beobachten ist, daß die vielen genau unterhalb der Austrittsöffnungen sich befindlichen Schüttguthaufen mit Spitzen zu einem einheitlichen Schüttguthaufen mit lediglich einer länglich ausgebildeten Spitze in der Draufsicht parallel zu der Auslaufseite durch z.B. geringe Erschütterungen während der Berieselung miteinander verschmelzen. Unter Spitze ist daher auch zu verstehen die aufgrund der Vielzahl an Austrittsöffnungen erzeugten unterhalb von diesen sich befindlichen Spitzen, die zu einem länglich ausgestalteten Kamm oder Schüttguthaufenkamm genannt verschmelzen können.

Jedoch kann es auch je nach Anforderungen der Reinigung der zu filtrierenden Flüssigkeit erforderlich sein, nur wenige Austrittsöffnungen oder Verteilerbleche z.B. zwei zu verwenden, so daß während der Berieselung zwei große ungleichseitige Schüttguthaufen erzeugt werden, die nicht miteinander verschmelzen. In der Regel kann die Gestalt der ungleichseitigen Schüttguthaufen mittels der Anordnung der Schüttgutberieselungseinrichtung, wie Austrittsöffnung oder Verteilerblech, zueinander, der Ausgestaltung der Schüttgutberieselungseinrichtung wie länglich oder rund, und / oder der Anzahl der Schüttgutberieselungseinrichtungen verändert werden.

Überdies ist zu beobachten, daß die z.B. Austrittsöffnungen des Schüttgutverteilers derart nahe der Auslaufseite des Filterraums angeordnet sein können, daß die durch Aufschüttung des Schüttgutes zu einem Schüttguthaufen erfolgte Klassierung des Schüttgutes hin zur Einlaufseite des Filterraums durch den zwischen der Spitze des Schüttguthaufens und der Auslaufseite befindlichen Bereich nicht wesentlich gestört wird. Hierbei ist sogar zu beobachten, daß auch die in diesem Bereich befindlichen Sandkörner größeren Korndurchmessers aufgrund der fortwährenden Berieselung und wegen der geringen Erschütterung der Oberfläche des Filterbettes unter Umständen in Richtung der Einlaufseite sich zu bewegen vermögen.

Als körniges Material können solche entsprechend der DIN 19 623 verwendet werden; hierbei eignen sich Filtersand als auch Filterkies gleichermaßen.

Durch die Anordnung der z.B. länglichen Austrittsöffnung des Schüttgutverteilers bewegen sich im wesentlichen auf der Oberseite der Filterbettes die Teile des Schüttgutes mit größerem Korndurchmesser in Richtung Einlaufseite des Filtrationsbehälters, wohingegen im wesentlichen auf der Oberseite der Filterbettes die Teile mit geringerem Korndurchmesser weniger sich in Richtung Einlaufseite bewegen und vielmehr im Bereich der Spitze des Schüttguthaufens verbleiben. Das bedeutet, daß im Falle der Verwendung von z.B. körnigem Sand die größeren Körner im wesentlichen in Richtung Einlaufseite rollen und die kleineren vorwiegend in den Bereich der Spitze des Schütthaufens verbleiben. Hierdurch wird eine andauernde Aufschüttung des Sandes bei Betrieb des erfindungsgemäßen Verfahrens in der erfindungsgemäßen Vorrichtung mit unterschiedlichem Korndurchmesser z.B. Sandkorndurchmesser erreicht, wobei der Korndurchmesser von der Einlaufseite hin in Richtung Schüttguthaufenspitze im wesentlichen geringer wird. Der Zusatz nämlich im wesentlichen wird angegeben, da die Sandkörner in Richtung zu der Einlaufseite je nach ihrem Korndurchmesser rollen und nicht auszuschließen ist, daß möglicherweise ein verschwindend geringer Teil mit großem Korndurchmesser bereits in der Nähe der Schüttguthaufenspitze verbleibt; es zeigt sich jedoch, daß dieser Teil zu vernachlässigen ist und die überragenden Erfolge der Erfindung nicht beeinträchtigt. Die Anordnung des Schüttgutverteilers mit seinen Austrittsöffnungen und gegebenenfalls mit Verteilerblechen an der Auslaufseite oder nahe der Auslaufseite bedeutet auch, daß quasi der ungleichseitige Schüttguthaufen die Oberseite des Filterbettes bilden kann, die Schüttguthaufenspitze im Bereich zwischen der Auslaufseite und der Mitte-Längsachse des Behälterabschnitts, des Filterraums und / oder des Berieselungsraums sich befinden kann, wodurch ermöglicht ist, daß das Schüttgut mit größerem Korndurchmesser im wesentlichen auf der Einlaufseite und das mit geringerem Korndurchmesser auf der Auslaufseite angeordnet wird; die der Einlaufseite zugewandte Hangseite des ungleichseitigen Schüttguthaufens ist länger als die der Auslaufseite zugewandte Hangseite des Schüttguthaufens. Die der Einlaufseite zugewandte Hangseite kann sich bis an die Einlaufseite bzw. an die der Auslaufseite abgewandte Wand erstrecken. Der Abstand der beispielsweise Austrittsöffnung von der Oberfläche der Oberseite des Filterbettes und /
oder der Abstand der Austrittsöffnung oder des Verteilerblechs zu der Einlaufseite können leicht gewählt werden, da der Abstand lediglich von wenigen physikalischen Größen wie Breite zwischen Einlauf- und Auslaufseite und erwünschter Korndurchmesser auf der Einlaufseite abhängig und je nach Erfordernis an die Filtration einstellbar sein kann. So kann der Abstand zwischen der Lotrechten der Austrittsöffnung und der Einlaufseite vorzugsweise ein Vielfaches des Abstands zwischen der Lotrechten und der Auslaufseite sein, so daß ein ungleichseitiger Schüttguthaufen bei der Berieselung der Oberfläche der Oberseite des Filterbettes erzeugt wird. Die Lotrechte der Austrittsöffnung ist im Sinne der Erfindung auch die Gerade, welche parallel zu der Berieselungsrichtung des Schüttguts ausgerichtet ist und den Mittelpunkt der zum Beispiel kreisrund ausgebildeten Austrittsöffnung schneidet.

Wesentlich ist, daß zumindest die Schüttgutberieselungseinrichtung oberhalb der Oberfläche der Oberseite des Filterbettes angeordnet ist, so daß der ungleichseitige Schüttguthaufen ausgebildet wird; das bedeutet, daß in einer Ausführungsform die Schüttguttrennapparatur nicht unbedingt oberhalb der Oberfläche der Oberseite des Filterbettes anzuorden ist, falls die Schüttgutberieselungseinrichtung oberhalb der Oberfläche der Oberseite des Filterbettes angeordnet ist.

Unter Berieselung wird auch im Sinne der Erfindung der Vorgang verstanden, welcher betrifft das Verlassen der Schüttgutberieselungseinrichtung durch regeneriertes Schüttgut bis zum Auftreffen desselben auf die Oberfläche des Filterbettes bzw. der Oberfläche der Oberseite des Filterbettes.

Als Schüttgutberieselungseinrichtung des Schüttgutverteilers werden beispielsweise eine oder mehrere längliche Austrittsöffnungen verwendet, die sich parallel zu der Auslaufseite und an der Auslaufseite sich erstrecken.

Der erfindungsgemäßen Vorrichtung liegt das Prinzip der kontinuierlichen horizontalen Durchströmung des Filterbettes in Kombination mit der vertikalen Filterbettbewegung während der Filtration zugrunde. Es zeigt sich, daß durch die Ausbildung eines ungleichseitigen Schüttguthaufens an der Auslaufseite im Filterraum diejenigen Teile des Schüttgutes, welche von größerem Korndurchmesser sind, sich in Richtung Einlaufseite des Filtrationsbehälters sich bewegen, hingegen die Teile mit geringerem Korndurchmesser auf der Auslaufseite verbleiben, so daß der Korndurchmesser von der Einlaufseite hin zu der Auslaufseite abnimmt. Auf der Einlaufseite werden bereits grobe oder großflockige Schmutzteilchen abgetrennt, hingegen die kleineren und kleinvolumigeren erst in dem der Auslaufseite zugewandten Bereich des Schüttgutes.

Darüber hinaus erfolgt gleichfalls kontinuierlich die Absaugung des mit Schwebstoffen beladenen Schüttgutes im unteren Bereich des Filtrationsraums und die Reinigung des Schüttgutes durch die Schüttguttrennapparatur sowie die Auffüllung des Filterbettes mit gereinigtem Schüttgut im oberen Bereich des Filtrationsraums mit Hilfe des Schüttgutverteilers erfolgen, so daß der zu filtrierenden Flüssigkeit kontinuierlich ein hinreichend unbeladenes Schüttgut zur Reinigung derselben angeboten wird.

Eine Verstopfung des Schüttgutes, wie sie bei der herkömmlichen Filtrationsvorrichtung zu beobachten ist, ist in hinreichender Weise wirkungsvoll wegen der dauernden Ausbildung der Grobkörnigkeit des Schüttgutes auf der Einlaufseite und kontinuierlichen Abzugs des gesamten Schüttgutes im Abzugsraum unterbunden. Daher erfolgt auch die Filtration von auch mit hohen Feststoffrachten oder Schwebstoffteilchen beladenen Flüssigkeiten mittels der erfindungsgemäßen Vorrichtung ohne die üblicherweise auftretenden plötzlich ansteigenden Druckverluste in dem Filterbett. Ebenso zeigt sich, daß die erfindungsgemäße Vorrichtung sich sowohl für hochbelastete, stark mit Feststoff- oder Schwebstoffteilchen belastete Industrieabwässer eignet, als auch für Brauchwasser, Kühlwasser, Kreislaufwasser und Schwimmbeckenwässer, die bekannterweise weniger stark mit Feststoff oder Schwebstoffteilchen belastet sind, ohne daß eine Anpassung der erfindungsgemäßen Vorrichtung, z.B. bez. der Tiefe des Filterbettes oder des Korndurchmessers des Schüttgutes, an die unterschiedlichen Zusammensetzungen der zu filtrierenden Flüssigkeiten erforderlich ist, so daß auch aus diesem Grund der apparative Aufwand überraschend klein, die Betriebskosten und Überwachungkosten der erfindungsgemäßen Vorrichtung aufgrund der hinreichend hohen Betriebssicherheit niedrig sind.

Abgesehen davon zeichnet sich die erfindungsgemäße Vorrichtung auch dadurch aus, daß im Vergleich zu der DE-A- 0 291 538 über die gesamte Höhe des Filterbettes filtriert werden kann.

Die Vielseitigkeit der erfindungsgemäßen Vorrichtung ist auch daran zu erkennen, daß diese im Überdruck- oder Unterdruckverfahren betrieben werden kann.

Vorteilhaft erweist sich auch die erfindungsgemäße Vorrichtung in bezug auf die geringen Anforderungen an die Kontrolle der Auffüllung des Filterraums mit körnigem Schüttgut, da die Anordnung bzw. Klassierung des Schüttgutes nach Korndurchmesser selbsttätig aufgrund der Schwerkraft ohne das Erfordernis eines Eingriffs von außen durch einseitige Berieselung der Oberfläche des Filterbettes erfolgt.

Sonach vereint das erfindungsgemäße Verfahren und die erfindungsgemäße Vorrichtung erstmals in gelungener Weise die Vorteile der Mehrschichtfiltration, nämlich die Vereinigung von Vor- und Nachreinigung, mit den Vorzügen des kontinuierlichen Filtrationsverfahrens, nämlich das dauernde Abführen von belastetem Schüttgut und der Zuführung von regeneriertem, in einer für den Fachmann als unerwartet zu betrachtenden Ausgewogenheit erfolgt.

Die erfindungsgemäße Vorrichtung zum kontinuierlichen Filtrieren von Flüssigkeiten umfaßt ein Hebesystem, vorzugsweise eine mittels Luft betriebene Mammutpumpe auf, deren unteres Saugende in dem unteren Abschnitt des Abzugsraums angeordnet ist. In einer weiteren Ausführungsform können an der dem Abzugsraum begrenzenden Trichterwand Einlaßdüsen, Injektoren angebracht sein, die beispielsweise Waschmedium wie Filtrat oder Wasser oder Lösungen oder dergleichen in den Abzugsraum spülen. Durch die kombinierte Wasser-Spülung des Filterbettes im Abzugsraum wird ein Wirbelbett erzeugt, welches ein Verbacken des Schüttgutes oder eine Brückenbildung desselben in dem Bereich des Abzugsraum zu verhindern vermögen. Zudem erfolgt durch die insbesondere Luft-Wasser-Spülung im Hebesystem eine eingehendere Reibung und Reinigung des Schüttgutes sowie eine Ersparnis von Waschwasser gegenüber der Methode, welche statt Luft lediglich Wasser als Waschmedium verwendet. Der Erfolg liegt offenbar darin, daß die nach oben gerichtete Wasserfließgeschwindigkeit innerhalb des Filterbettes örtlich kurzfristig Beschleunigungen und Richtungsänderungen im Abzugsraum erfährt, die aus der plötzlichen Wasserverdrängung durch aufsteigende große Luftblasen entstehen.

In einer Ausführungsform kann die Zulaufkammer an ihrem oberen Ende eine Zulauföffnung zur Einleitung der zu filtrierenden Flüssigkeit in die Zulaufkammer aufweisen; jedoch kann die Zulauföffnung je nach Erfordernis an der Außenseite angeordnet sein.

Die Filtersammelkammer weist einen Ablauf auf; dieser ist vorzugsweise von dem Bereich der Auslaufseite mit Öffnungen beabstandet z.B. am oberen Ende der Filtratsammelkammer angeordnet. Die Filtratsammelkammer kann an ihrem oberen Ende und / oder an der Außenhülle mit einem Ablauf zur Ableitung des in der Filtratsammelkammer gesammelten Filtrats verbunden sein. Die Zulaufkammer kann mit dem Filterraum über Düsen, Jalousien, Lamellen, Spaltsiebe und / oder siebförmig angeordnete Öffnungen flüssigkeitsmäßig in Verbindung stehen. Ebenfalls ist es möglich, wenn die Filtratsammelkammer mit dem Filterraum über Düsen, wie Filterdüsen, Jalousien, Lamellen, Spaltsiebe und / oder siebförmig angeordnete Öffnungen filtratmäßig in Verbindung steht.

Der Filtrationsbehälter, der kubisch oder quaderförmig ausgebildet sein kann, kann den mittleren Behälterabschnitt mit dem Filterraum, den unteren mit dem Abzugsraum und den oberen Behälterabschnitt mit dem Berieselungsraum umfassen. Durch das herkömmliche Hebesystem wird über ein Ableitungsrohr das mit Luft zusammen mit einem Teil der zu filtrierenden Flüssigkeit vermischte Schüttgut in einen Aufstromklassierer als Schüttguttrennapparatur aufwärts gefördert. Durch das vorzugsweise in der Draufsicht mittig angeordnete Ableitungsrohr sind wesentlich die Filtration störende Filtrationstoträume nicht zu beobachten. Es kann auch, falls erwünscht, zusätzlich Waschmedium in das Hebsystem und / oder in das im Abzugsraum befindliche Filterbett zugeführt werden. Die Schüttguttrennapparatur ist eine dem Fachmann bekannte, wobei nach Trennung der Schmutzteilchen von dem Schüttgut die Schmutzteilchen mit dem Teil der zu dem Aufstromklassierer beförderten zu filtrierenden Flüssigkeit die erfindungsgemäße Vorrichtung über den Stutzen verläßt. Das gereinigte Schüttgut rieselt erneut wie oben angegeben einseitig auf die Oberfläche des Filterbettes bzw. auf die Oberfläche der Oberseite des Filterbettes. Unter Rieseln ist auch Sedimentieren zu verstehen. Vorzugsweise umfaßt der von dem Hebesystem und in den Aufstromklassierer beförderte Strom Schmutzteilchen und zu filtrierende Flüssigkeit. Hierbei ist verständlich, daß aus dem auf der Auslaufseite zugewandten Bereich des Abzugsraums statt zu filtrierende Flüssigkeit vornehmlich Filtrat aufgesaugt wird.

### Ausführungsbeispiel

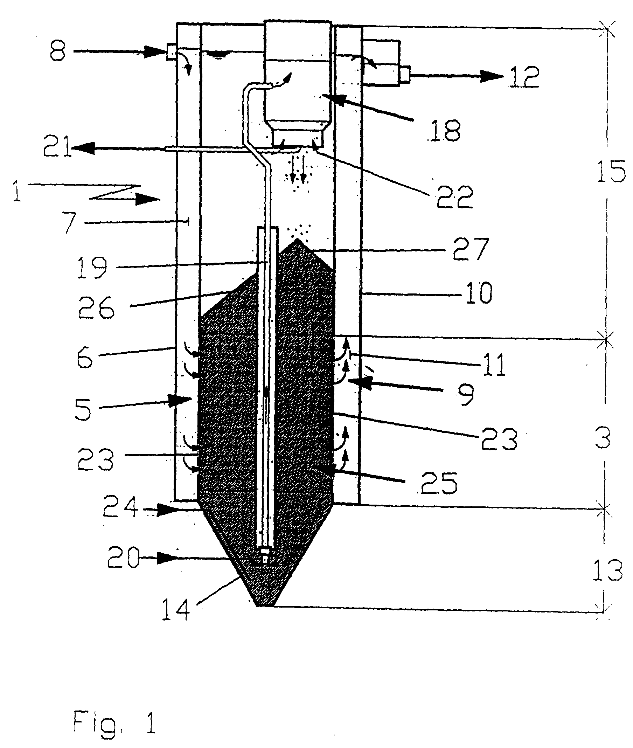

Die Zeichnung zeigt aufgrund der zeichnerischen Vereinfachung in schematischer stark vergrößerter Weise ohne Anspruch auf eine maßstabsgetreute Wiedergabe eine Ausführungsform ohne Beschränkung der Erfindung auf diese in
**Fig. 1** den Längsschnitt durch die erfindungsgemäße Vorrichtung zum kontinuierlichen Filtrieren.

Die erfindungsgemäße Vorrichtung zum kontinuierlichen Filtrieren von Flüssigkeiten umfaßt einen aufrecht stehenden Filtrationsbehälter 1, welcher im Querschnitt rechteckig ausgebildet ist. Der Filtrationsbehälter 1 kann kubisch oder quaderförmig ausgestaltet sein. Der Filtrationsbehälter 1 umfaßt Wände, welche gleichfalls im Querschnitt rechteckig ausgerichtet sind. Eine Wand der Wände ist als Einlaufseite 5, auch Einlaufseitenwand genannt, für die zu filtrierende Flüssigkeit mit Öffnungen 23 versehen. Die Öffnungen 23 auch Durchbrüche genannt verbinden flüssigkeitsmäßig die Zulaufkammer 7 mit dem vorzugsweise in der Draufsicht rechteckig ausgebildeten Filterraum 3. Die Einlaufseite 5 des Behälters 1 ist von einer Außenwand 6 umgeben, welche von der Einlaufseite 5 beabstandet unter Bildung der Zulaufkammer 7 angeordnet ist. Die Zulaufkammer 7 ist an ihrem unteren Ende und oberen Ende abgeschlossen. Das obere Ende der Zulaufkammer 7 weist eine Zulauföffnung 8 auf, über die die Zulaufkammer 7 mit einer Zulaufleitung flüssigkeitsmäßig verbunden ist. Die zu filtrierende Flüssigkeit fließt über die Zulaufleitung und Zulauföffnung 8 in die Zulaufkammer 7.

Auf der der Einlaufseite 5 gegenüberliegenden Seite als Auslaufseite 9 sind gleichfalls Öffnungen 23 vorhanden, welche die Filtratsammelkammer 11 mit der Filterraum 3 flüssigkeitsmäßig verbinden. Die Öffnungen 23, auch Durchbrüche genannt, der Ablaufseite 9 verbinden filtratmäßig die Filterraum 3 mit der Filtratsammelkammer 11. Die Einlaufseite 5 kann man in Gestalt von Jalousien oder Lamellen ausbilden. Die Auslaufseite 9 des Filtrationsbehälters 1 ist von einer Außenwand 10 oder Außenhülle umgeben, welche von der Auslaufseite 9 beabstandet unter Bildung der Filtratsammelkammer 11 angeordnet ist. Die Wand als Auslaufseite 9, auch Auslaufseitenwand genannt, kann z.B. in Form von Spaltsieb oder Filterdüsen ausgestaltet sein. Im vorliegenden Fall erstrecken sich die Öffnungen 23 im wesentlichen in der ganzen Höhe der Filterraum 3 und in der ganzen Breite der Einlaufseite 5 und in der ganzen Breite der Ablaufseite 9. Die Filterraum 3 ist der Bereich des Filterbettes, welcher zur Filtration der zu filtrierenden Flüssigkeit dient. Das Ausmaß der Erstreckung der Öffnungen 23 der Einlaufseite 5 entspricht vorzugsweise dem der Öffnungen 23 der Auslaufseite 9, um eine gleichmäßige Verteilung der zu filtrierenden Flüssigkeit auf die gesamte Filterfläche zu ermöglichen.

Durch das Einleiten der zu filtrierenden Flüssigkeit hier Industrieabwasser mit Feststoffteilchen erfolgt der Fluß der Flüssigkeit durch das Filterbett im wesentlichen horizontal und ist als ganzflächige Strömung ausgebildet. Um ein ständiges Abscheiden des Schüttgutes 25 von Feststoffteilen, welche sich in dem Abwasser befinden, zu erreichen, wird das Schüttgut 25 in dem Abzugsraum 13 mit Hilfe einer Mammutpumpe 20 über das untere Saugende derselben abgesaugt. Der Abzugsraum 13 des Behälters 1 ist als trichterförmiger ausgebildet, wobei die den Abzugsraum 13 begrenzende Trichterwand 14 Injektoren 24 zur zusätzlichen Einleitung von Filtrat zur Auflockerung des mit Schmutzteilchen beladenen Schüttgutes und zwecks Vermeidung von Brückenbildungen vorgesehen sein können. Als körniges Schüttgut wird herkömmlicher Filtersand beispielsweise nach DIN 19 623 verwendet.

Die Mammutpumpe 20 wird mit Luft betrieben, wobei das Abziehen des Schüttgutes pulsierend in einer bevorzugten Ausführungsform erfolgt. Bezüglich der herkömmlichen Mammutpumpe als Hebesystem 20 wird eine dem Fachmann vertraute verwendet und bezug genommen auf die EP-A 0 291 538. Das mit Feststoffteilchen beladene über ein Ableitungsrohr 19 nach oben in dem vorzugsweise in der Draufsicht rechteckig ausgebildeten Berieselungsraum 15 des Behälters 1 beförderte Schüttgut wird in dem Aufstromklassierer 18 von den Feststoffteilchen getrennt und die aufgesaugte zu filtrierende Flüssigkeit gegebenenfalls mit Filtrat und mit den Feststoffteilchen im wesentlichen quantitativ über die Ableitung 21 nach außen abgeführt. Das Ableitungsrohr 19 kann wie hier als Mitte-Längsachse des Behälterabschnitts 1 mit dem Berieselungsraum 15 und dem Filterraum 3 und dem Abzugsraum 13 zentriert ausgerichtet sein. Der Berieselungsraum 15 enthält den Schüttguthaufen und vorzugsweise Wasser als Waschmedium. In einer Ausführungsform kann statt des über Injektoren 24 eingeführten Waschwasser gleichfalls über die Injektoren 24 ein Teil des über den Ablauf 12 nach außen abgeführten Filtrats in den Abzugsraum 13 eingeleitet werden.

Der Schüttgutverteiler umfaßt eine Vielzahl an Schüttgutberieselungseinrichtungen. Jede Schüttgutberieselungseinrichtung 22 ist als runde Austrittsöffnung ausgestaltet. Die Austrittsöffnungen 22 sind in Reihe angeordnet, wobei die Reihe parallel zu der Auslaufseite 9 über die ganze Breite der Auslaufseite 9 verläuft. Die Reihe ist in unmittelbarer Nähe zu der Auslaufseite 9 angeordnet, so daß während der Berieselung der Oberfläche der Oberseite des Filterbettes ein ungleichseitiger Schüttguthaufen mit im wesentlich einer Spitze erzeugt wird, zumal die Austrittsöffnungen 22 nahe aneinander angeordnet sind. Da viele Austrittsöffnungen 22 in Reihe nahe aneinander angeordnet sind, verschmelzen die durch die Berieselung aus jeder Austrittsöffnung 22 erzeugten Spitzen zu einem einheitlichenSchüttguthaufen mit einer Spitze bzw. Schüttguthaufenkamm. Unter Spitze ist also auch im Sinne der Erfindung ein quasi länglich ausgebildeter Schüttguthaufenkamm zu verstehen. Dieser Schüttguthaufenkamm bzw. Spitze verläuft in der Draufsicht quer zu der Fließrichtung der zu filtrierenden Flüssigkeit im Filterbett. Unmittelbare Nähe bedeutet auch, daß durch die Berieselung der Oberfläche der Oberseite des Filterbettes ein ungleichseitiger Schütthaufen entsteht, bei dem die der Einlaufseite 5 zugewandte Hangseite 26 um ein Vielfaches länger ist als die der Auslaufseite 9 zugewandte Hangseite 27. Länge bedeutet hierbei, das Ausmaß der Hangseite von der Spitze des Schütthaufens in Richtung Einlauf- 5 bzw. Auslaufseite 9. In der Draufsicht auf das Filterbett verläuft die Spitze oder Spitzenkamm des Schüttguthaufens annähernd parallel zu der Auslaufseite 9, also quer zu der Fließströmung der zu filtrierenden Flüssigkeit im Filterbett. Die Pfeile im Berieselungsraum 15 und Filterraums 3 zeigen insbesondere die Richtung des rieselnden und des abzuziehenden Schüttgutes an.

In einem Ausführungsbeispiel der besonderen Art kann statt der Vielzahl der Austrittsöffnungen 22 eine längliche Anwendung finden. Ebenfalls können stattdessen ein oder mehrere Verteilerbleche beispielsweise zur gesteuerten Erzeugung eines oder mehrere Schüttguthaufen, so daß die Lage der Spitze des Schüttguthaufens von außen, falls erforderlich und erwünscht, verändert werden kann zum Beispiel zur Erzeugung von mehreren Filtrationsschichten innerhalb des Filterbettes (nicht gezeigt).

Durch die parallel zu der Auslaufseite 9 angeordneten Austrittsöffnungen 22 nahe bei der Ablaufseite 9 wird der ungleichseitige Schüttguthaufens erzeugt; nach Auftreffen auf den ungleichseitigen Schüttguthaufen bewegen sich die Sandkörner mit großem Korndurchmesser im wesentlichen in Richtung hin zu der Einlaufwand 5, die mit kleinerem Durchmesser verbleiben eher in der Nähe der Schüttguthaufenspitze. Hierdurch wird ein Filterbett ausgestaltet, bei welchem die Korngröße oder Korndurchmesser des Sandes in Fließrichtung der zu filtrierenden Flüssigkeit im Filterbett weitgehend gleichmäßig abnimmt. Die Fließrichtung der zu filtrierenden Flüssigkeit erfolgt quer zu der Abzugsrichtung des Schüttgutes.

Es zeigt sich, daß durch das erfindungsgemäße Verfahren bei der Reinigung vom Industrieabwasser mit einem hohen Feststoffteilchenanteil der größte Teil der abzufiltrierenden Feststoffe -auch im Falle der Ausflockung, was bei herkömmlichen Sandfiltern zu Verstopfung des Filters und Durchschlagen der Feststoffe führt- sich an den grobkörnigeren Sand anlagert, wohingegen die feineren Schmutzteilchen des Industrieabwassers von dem Sand mit dem kleineren Korndurchmesser in hinreichender Weise abgeschieden werden.

Gerade durch die Bildung des Filterbettes mit in Fließrichtung des Industrieabwassers abnehmender Korngröße bzw. Korndurchmesser zeigen sich im Vergleich zu kontinuierlich zu betreibenden Filtrationsverfahren weitgehend keine Verschlüsse durch Ausflockungen, kein Durchschlagen von Feststoffen oder Auftreten derselben auf der Auslaufseite. Daher sind ebenso die üblicherweise bei Verstopfung auftretende Druckverlustschwankungen in dem Filterbett nicht meßbar. Durch das kontinuierliche Abziehen, Regenerieren und Berieseln des Filterbettes in der oben angezeigten Art zeigt sich, daß das auf der Auslaufseite 9 ausstretende Filtrat von weitgehend gleichbleibender Zusammensetzung trotz langer Betriebsdauer der erfindungsgemäßen Vorrichtung ist.

## Patentansprüche

1. Vorrichtung zum kontinuierlichen Filtrieren von Flüssigkeiten, welche einen Filtrationsbehälter (1) mit einem aufrechtstehenden im Querschnitt rechteckig ausgestalteten Behälterabschnitt umfaßt,
a) dessen im Querschnitt rechteckig ausgerichtete Wände eine Einlaufseitenwand (5) und eine der Einlaufseitenwand (5) gegenüberliegende Auslaufseitenwand (9) aufweisen, wobei sich an die Einlaufseitenwand (5) eine Zulaufkammer (7) und an die Auslaufseitenwand (9) eine Filtratsammelkammer (11) anschließen, und die Einlaufseitenwand (5) und die Auslaufseitenwand (9) parallel zueinander und parallel zu der Berieselungsrichtung eines Schüttgutes (25) auf ein Filterbett ausgerichtet sind,
b) welcher Behälterabschnitt einen Berieselungsraum (15) zur Aufnahme einer Schüttguttrennapparatur (18) zum Abtrennen von Schmutzteilchen von dem Schüttgut (25) und Berieseln des Filterbettes sowie einen an den Berieselungsraum (15) sich anschließenden Filterraum (3) zur Aufnahme des Filterbettes aus dem körnigen Schüttgut (25) umfaßt,
c) an das untere Ende des Filterraums (3) sich ein Abzugsraum (13) anschließt, wobei der Abzugsraum (13) trichterförmig ausgebildet ist und an das untere Ende des Behälterabschnitts der Abzugsraum (13) mit seiner Trichterwand (14) angeordnet ist,
d) die Schüttguttrennapparatur (18) mit einem Ableitungsrohr (19) eines Hebesystems (20) in Verbindung steht, welches mit seinem unteren Saugende in den unteren Abschnitt des Abzugsraums (13) hineinragt und das Ableitungsrohr (19) sich in das obere Ende des Berieselungsraums (15) hin erstreckt, **dadurch gekennzeichnet, daß**
e) die im Bereich des Filterraums (3) flüssigkeitsdurchlässige Einlaufseitenwand (5) Öffnungen (23) zur Einleitung der zu filtrierenden Flüssigkeit von der Zulaufkammer (7) in den Filterraum (3) auf der ganzen Höhe des Filterraums (3) und der ganzen Breite der Einlaufseitenwand (5) aufweist,
f) die im Bereich des Filterraums (3) flüssigkeitsdurchlässige Auslaufseitenwand (9) Öffnungen (23) zur Ableitung des Filtrats aus dem Filterraum (3) in die Filtratsammelkammer (11) auf der ganzen Höhe des Filterraums (3) und der ganzen Breite der Auslaufseitenwand (9) aufweist,
g) das Filterraum (3) einlaufseitig von der Einlaufseitenwand (5) und auslaufseitig von der Auslaufseitenwand (9) begrenzt ist,
h) das Ausmaß der Fläche der durchströmten Auslaufseite (9) dem der Fläche der Einlaufseite (5) entspricht,
i) die Schüttguttrennapparatur (18) mit einem Schüttgutverteiler verbunden ist, der eine oder mehrere Schüttgutberieselungseinrichtungen (22) mit Austrittsöffnungen aufweist, welche in Reihe parallel zu der Auslaufseite (9) ausgerichtet sind,
j) die Schüttgutberieselungseinrichtungen (22) oberhalb der Oberseite des Filterbettes und an der Auslaufseitenwand (9) angeordnet sind zur Berieselung der Oberfläche der Oberseite des im Filterraums (3) sich befindlichen Filterbettes mit dem in der Schüttguttrennapparatur (18) abgetrennten und von Schmutzteilchen befreiten Schüttgut (25) und zur Bildung mindestens eines ungleichseitigen Schüttguthaufens mit einer der Einlaufseitenwand zugewandten Hangseite (26), welche länger ist als die der Auslaufseitenwand zugewandte Hangseite (27).

2. Vorrichtung zum kontinuierlichen Filtrieren von Flüssigkeiten nach Anspruch 1, **dadurch gekennzeichnet, daß** die Austrittsöffnungen oval, rund und / oder länglich ausgebildet sind.

3. Vorrichtung zum kontinuierlichen Filtrieren von Flüssigkeiten nach Anspruche 1 oder 2,
**dadurch gekennzeichnet, daß** die Zulaufkammer (7) mit dem Filterraum (3) über Düsen, Jalousien, Lamellen, Spaltsiebe und / oder siebförmig angeordnete Öffnungen (23) flüssigkeitsmäßig in Verbindung steht.

4. Vorrichtung zum kontinuierlichen Filtrieren von Flüssigkeiten nach einem der Ansprüche 1 bis 3, **dadurch gekennzeichnet, daß** die Filtratsammelkammer (11) mit dem Filterraum (3) über Düsen, Jalousien, Lamellen, Spaltsiebe und / oder siebförmig angeordnete Öffnungen (23) filtratmäßig in Verbindung steht.

5. Vorrichtung zum kontinuierlichen Filtrieren von Flüssigkeiten nach einem der Ansprüche 1 bis 4, dadurch **gekennzeichnet, daß** der Abzugsraum (13) mit Injektoren (24) zur Einleitung von Waschmedium in Verbindung steht.

6. Vorrichtung zum kontinuierlichen Filtrieren von Flüssigkeiten nach Anspruche 1 oder 2, **dadurch gekennzeichnet, daß** die Austrittsöffnungen über die ganze Breite der Auslaufseite (9) angeordnet sind.

7. Verwendung der Vorrichtung nach einem der Ansprüche 1 bis 6 zur Reinigung von Abwässern, zur Aufbereitung von Brauchwasser aus Grund- und Oberflächenwasser, Kreislaufwasser, Kühlwasser und Schwimmbeckenwasser, Prozeßflüssigkeiten sowie zur Trinkwasseraufbereitung.

8. Verfahren zum kontinuierlichen Filtrieren von Flüssigkeiten, wobei
a) eine zu filtrierende Flüssigkeit durch eine flüssigkeitsdurchlässige Einlaufseitenwand (5) eines aufrechtstehenden rechteckig ausgestalteten Behälterabschnitts eines Filtrationsbehälters (1) in dessen Filterraum (3), welcher körniges Schüttgut als Filter aufweist, über die ganze Höhe des Filterraums (3) und über die ganze Breite der Einlaufseite (5) eingeleitet und das Filtrat durch eine der Einlaufseite (5) gegenüberliegende flüssigkeitsdurchlässige Auslaufseitenwand (9) über die ganze Höhe des Filterraums (3) und über die ganze Breite der Auslaufseite (9) abgeleitet werden,
b) an das obere Ende des Filterraums (3) ein Berieselungsraum (15) zur Aufnahme einer Schüttguttrennapparatur (18) zum Abtrennen von Schmutzteilchen von dem Schüttgut und und an dem unteren Ende des Filterraums (3) ein Abzugsraum (13) ausgebildet werden,
c) das Schüttgut in dem Filterraum (3) von oben nach unten und quer zu der Fließrichtung der zu filtrierenden Flüssigkeit in dem Filterraum (3) bewegt wird,
d) das Schüttgut im unteren Abschnitt des Abzugsraums (13) mittels eines Hebesystems abgezogen, von Schmutzteilchen befreit und der Oberfläche der Oberseite des Filterbettes durch Berieselung der Oberfläche der Oberseite des Filterbettes unter Bildung mindestens eines ungleichseitigen Schüttguthaufens zugeführt wird, wobei die der Einlaufseitenwand (3) zugewandte Hangseite des Schüttguthaufens länger als die der Auslaufseitenwand (9) zugewandte ist und das Schüttgut im wesentlichen mit zunehmender Korngröße in Richtung zu der Einlaufseitenwand (5) verteilt wird und
e) das Filterbett ganzflächig von der zu filtrierenden Flüssigkeit durchströmt wird, wobei das Ausmaß der Fläche der durchströmten Auslaufseite (9) dem Ausmaß der Fläche der Einlaufseite (5) entspricht.

9. Verfahren zum kontinuierlichen Filtrieren von Flüssigkeiten nach Anspruch 8, **dadurch gekennzeichnet,** daß im Überdruck- oder Unterdruckverfahren gefahren wird.

## Claims

1. Device for the continuous filtration of liquids, comprising a filtration vessel (1) with an upright vessel section of rectangular cross-section,
a) the walls of which, which are aligned rectangularly in cross-section, have an inlet sidewall (5) and an outlet sidewall (9) placed opposite the inlet sidewall (5), with a feed chamber (7) associated with the inlet sidewall and a filtrate collecting chamber (11) associated with the outlet sidewall (9), and the inlet sidewall (5) and the outlet sidewall (9) being aligned parallel to each other and parallel to the direction of sprinkling of a bulk material (25) onto a filter bed,
b) which vessel section comprises a sprinkling chamber (15) for holding a bulk material separating apparatus (18) for removing dirt particles from the bulk material (25) and sprinkling the filter bed and a filtration chamber (3) associated with the sprinkling chamber (15) for holding the filter bed consisting of the granular bulk material (25),
c) associated with the lower end of the filtration chamber (3) is a discharge chamber (13), the discharge chamber (13) being funnel-shaped and being located with its funnel wall (14) at the lower end of the vessel section,
d) the bulk material separating apparatus (18) is connected to a drain pipe (19) of a lifting system (20), the lower suction end of which projects into the lower portion of the discharge chamber (13) and the drain pipe (19) extends into the upper end of the sprinkling chamber (15), characterised in that
e) the inlet sidewall (5), which is liquid-permeable in the region of the filtration chamber (3), has orifices (23) for admitting the liquid to be filtered from the feed chamber (7) into the filtration chamber (3) over the entire height of the filtration chamber (3) and the entire width of the inlet sidewall (5),
f) the oulet sidewall (9), which is liquid-permeable in the region of the filtration chamber (3), has orifices (23) for draining the filtrate from the filtration chamber (3) into the filtrate cellecting chamber (11) over the entire height of the filtration chamber (3) and the entire width of the outlet sidewall (9),
g) the filtration chamber (3) is bounded on the inlet side by the inlet sidewall (5) and on the outlet side by the outlet sidewall (9),
h) the extent of the area of the permeable outlet side (9) corresponds to that of the area of the inlet side (5),
i) the bulk material separating apparatus (18) is connected to a bulk material distributor having one or more bulk material sprinkling devices (22) with outlet orifices which are aligned in a row parallel to the outlet side (9),
j) the bulk material sprinkling devices (22) are arranged above the top side of the filter bed and at the outlet sidewall (9) for sprinkling the surface of the top side of the filter bed located in the filtration chamber (3) with the bulk material (25) which has been separated and freed from dirt particles in the bulk material separating apparatus (18), and for forming at least one unequally-sided pile of bulk material with a sloping side (26) facing the inlet sidewall which is longer than the sloping side (27) facing the outlet sidewall.

2. Device for the continuous filtration of liquids as claimed in Claim 1, characterised in that the outlet orifices are oval, circular and/or oblong in shape.

3. Device for the continuous filtration of liquids as claimed in Claim 1 or 2, characterised in that the feed chamber (7) is in fluid communication with the filtration chamber (3) via jets, louvres, blades, bar or slotted-hole screens and/or orifices (23) arranged in the form of a screen.

4. Device for the continuous filtration of liquids as claimed in any one of Claims 1 to 3, characterised in that the filtrate collecting chamber (11) is in filtrate communication with the filtration chamber (3) via jets, louvres, blades, bar or slotted-hole screens and/or orifices (23) arranged in the form of a screen.

5. Device for the continuous filtration of liquids as claimed in any one of Claims 1 to 4, characterised in that the discharge chamber (13) is in communication with injectors (24) for the introduction of washing fluid.

6. Device for the continuous filtration of liquids as claimed in Claim 1 or 2, characterised in that the outlet orifices are arranged over the entire width of the outlet side (9).

7. Use of the device as claimed in any one of Claims 1 to 6 for the purification of effluents, for the preparation of industrial water from ground an surface water, circulating water, cooling water and swimming-pool water, process fluids and also for the production of potable water.

8. Process for the continuous filtration of liquids, wherein
a) a liquid to be filtered is introduced through a liquid-permeable inlet sidewall (5) of an upright, rectangulary shaped vessel section of a filtration vessel (1) into its filtration chamber (3), which contains granular bulk material as the filter, over the entire height of the filtration chamber (3) and over the entire width of the inlet side (5) and the filtrate is discharged through a liquid-permeable outlet sidewall (9) located opposite the inlet side (5) over the entire height of the filtration chamber (3) and over the entire width of the outlet side (9),
b) a sprinkling chamber (15) for holding a bulk material separating apparatus (18) for removing dirt particles from the bulk material is formed at the upper end of the filtration chamber (3) and a discharge chamber (13) is formed at the lower end of the filtration chamber (3),
c) the bulk material in the filtration chamber (3) is moved vertically downwards crosswise to the direction of flow of the liquid to be filtered in the filtration chamber (3),
d) the bulk material in the lower section of the discharge chamber (13) is withdrawn by means of a lifting system, freed from dirt particles and supplied to the surface of the top side of the filter bed by sprinkling the surface of the top side of the filter bed with formation of at least one unequally-sided pile of bulk material, the sloping side of the pile of bulk material which faces the inlet sidewall (5) being longer than the one which faces the outlet sidewall (9) and the bulk material is substantially distributed with increasing grain size in the direction of the inlet sidewall (5), and
e) the liquid to be filtered passes through the filter bed over its entire surface, with the extent of the area of the permeable outlet side (9) corresponding to the extent of the area of the inlet side (5).

9. Process for the continuous filtration of liquids as claimed in Claim 8, characterised in that it is operated in pressure or vacuum mode.

## Revendications

1. Dispositif pour filtrer en continu des liquides, qui comprend un récipient de filtration (1) comportant une partie verticale, qui est agencée avec une forme rectangulaire en coupe transversale et
a) dont les parois, qui sont disposées à angle droit en coupe transversale, comportent une paroi latérale d'entrée (5) et une paroi latérale de sortie (9), qui est située à l'opposé de la paroi latérale d'entrée (5), une chambre d'arrivée (7) se raccordant à la paroi latérale d'entrée (5) et une chambre (11) d'accumulation du filtrat se raccordant à la paroi latérale de sortie (9), et la paroi latérale d'entrée (5) et la paroi latérale de sortie (9) étant parallèles entre elles et parallèles à la direction de ruissellement d'un matériau en vrac (25) sur un lit filtrant,
b) laquelle partie du récipient comprend un espace de ruissellement (15) servant à recevoir un équipement (18) de séparation du matériau en vrac servant à séparer les particules de saleté du matériau en vrac (25) et à produire un ruissellement sur le lit filtrant, ainsi qu'une chambre de filtre (3) qui se raccorde à la chambre de ruissellement (15) et sert à loger le lit filtrant formé par le matériau en vrac à l'état de grains (25),
c) une chambre de décharge (13) se raccorde à l'extrémité inférieure de la chambre de filtre (3), la chambre de décharge (13) étant agencée en forme d'entonnoir et la chambre de décharge (13) étant disposée, avec sa paroi en forme de trémie (14), à l'extrémité inférieure de la partie du récipient,
d) l'équipement (18) de séparation du matériau en vrac est relié par l'intermédiaire d'une conduite d'évacuation (19) d'un système de soulèvement (20), qui pénètre par son extrémité inférieure d'aspiration, dans la partie inférieure de la chambre de décharge (13), tandis que le tube d'évacuation (19) s'étend dans l'extrémité supérieure de la chambre de ruissellement (15),
caractérisé en ce que
e) la paroi latérale d'entrée (5), qui est passante pour le liquide dans la zone de la chambre de filtre (3) comporte des ouvertures (23) pour introduire le liquide à filtrer depuis la chambre d'arrivée (7) dans la chambre de filtre (3) sur toute la hauteur de la chambre de filtre (3) et sur toute la largeur de la paroi latérale d'entrée (5),
f) la paroi latérale de sortie (9), qui est passante pour le liquide dans la zone de la chambre de filtre (3), comporte des ouvertures (23) pour évacuer le filtrat hors de la chambre de filtre (3) pour l'introduire dans la chambre (11) de collecte du filtrat, sur toute la hauteur de la chambre de filtre (3) et sur toute la largeur de la paroi latérale de sortie (9),
g) la chambre de filtre (3) est limitée côté entrée par la paroi latérale d'entrée (5) et côté sortie par la paroi latérale de sortie (9),
h) l'étendue de la surface du côté de sortie traversé (9) correspond à l'étendue de la surface du côté entrée (5),
i) l'équipement (18) de séparation du matériau en vrac est relié à un répartiteur du matériau en vrac, qui comporte un ou plusieurs dispositifs (22) de ruissellement du matériau en vrac comportant des ouvertures de sortie qui sont orientées suivant une rangée parallèlement au côté de sortie (9),
j) les dispositifs (22) de ruissellement du matériau en vrac sont disposés au-dessus de la face supérieure du lit filtrant et sur la paroi latérale de sortie (9) pour obtenir le ruissellement du matériau en vrac (25) séparé dans l'équipement (18) de séparation du matériau en vrac et libéré de particules de saleté, sur la surface de la face supérieure du lit filtrant situé sur la chambre de filtre (3) et pour la formation d'au moins un tas du matériau en vrac à côtés inégaux, ayant un côté incliné (26), tourné vers la paroi latérale d'entrée, qui est plus long que le côté incliné (27) tourné vers la paroi latérale de sortie.

2. Dispositif pour filtrer en continu des liquides selon la revendication 1, caractérisé en ce que les ouvertures de sortie ont une forme ovale, circulaire et/ou allongée.

3. Dispositif pour filtrer en continu des liquides selon les revendications 1 ou 2, caractérisé en ce que la chambre d'amenée (7) est reliée selon une liaison de transfert de liquide, à la chambre de filtre (3) par l'intermédiaire de buses, de jalousies, de lamelles, de tamis à fentes et/ou d'ouvertures (23) disposées sous la forme d'un tamis.

4. Dispositif pour filtrer en continu des liquides, selon l'une des revendications 1 à 3, caractérisé en ce que la chambre (11) de collecte du filtrat est reliée, pour le transfert du filtrat, à la chambre de filtre (3) par l'intermédiaire de buses, de jalousies, de lamelles, de tamis à fentes et/ou d'ouvertures (23) disposées en forme de tamis.

5. Dispositif pour filtrer en continu des liquides selon l'une des revendications 1 à 4, caractérisé en ce que la chambre de décharge (13) est reliée à des injecteurs (24) servant à introduire un milieu de lavage.

6. Dispositif pour filtrer en continu des liquides selon les revendications 1 ou 2, caractérisé en ce que les ouvertures de sortie sont disposées sur toute la largeur du côté de sortie (9).

7. Utilisation du dispositif selon l'une des revendications 1 à 6, pour purifier des eaux usées, pour traiter de l'eau non potable provenant de nappes phréatiques ou d'eaux de surface, d'eaux de circuits, d'eaux de refroidissement et d'eaux de bassins de décantation, de liquides de traitement ainsi que pour la préparation d'eau potable.

8. Procédé pour filtrer en continu des liquides, selon lequel
a) un liquide à filtrer est introduit par une paroi latérale d'entrée (5) laissant passer le liquide, d'une partie verticale, agencée avec une forme rectangulaire, d'un récipient de filtration (1), dans la chambre de filtre (3) de ce récipient, qui comporte un matériau en vrac granuleux en tant que filtre, sur toute la hauteur de la chambre de filtre (3) et sur toute la largeur du côté d'entrée (5), et le filtrat est évacué par une paroi latérale de sortie (9), qui est passante pour les liquides et située à l'opposé du côté entrée (5), sur toute la hauteur de la chambre de filtre (3) et sur toute la largeur du côté sortie (9),
b) une chambre de ruissellement (15), servant à recevoir un équipement (18) de séparation du matériau en vrac pour séparer les particules de saleté du matériau en vrac, est formée sur l'extrémité supérieure de la chambre de filtre (3) et une chambre de décharge (13) est formée sur l'extrémité inférieure de la chambre de filtre (3),
c) le matériau en vrac est déplacé dans la chambre de filtre (3), de haut en bas et transversalement par rapport à la direction de circulation du liquide à filtrer dans la chambre de filtre (3),
d) le matériau en vrac dans la partie inférieure de la chambre de décharge (13) est déchargé à l'aide d'un système de soulèvement, est libéré de particules de saleté et est envoyé à la surface de la face supérieure du lit filtrant par ruissellement sur la surface de la face supérieure du lit filtrant moyennant la formation d'au moins un tas du matériau en vrac à côtés inégaux, le côté incliné, tourné vers la paroi latérale d'entrée (3), du tas du matériau en vrac étant plus long que celui qui est tourné vers la paroi latérale de sortie (9), et le matériau en vrac étant réparti essentiellement avec une taille de grains qui augmente en direction de la paroi latérale d'entrée (5), et
e) le lit filtrant est traversé sur toute sa surface par le liquide à filtrer, l'étendue de la surface du côté sortie (9) traversée par le liquide correspondant à l'étendue de la surface du côté entrée (5).

9. Procédé pour filtrer en continu des liquides selon la revendication 8, caractérisé en ce qu'on travaille avec le procédé en surpression ou le procédé en dépression.
